# EUROPÄISCHE PATENTSCHRIFT

(11) **EP 0 545 950 B1**
(45) Veröffentlichungstag und Bekanntmachung des Hinweises auf die Patenterteilung: **23.03.1994**
(21) Anmeldenummer: 91913655.6
(22) Anmeldetag: 01.08.1991
(51) Int. Cl.: B23Q 11/00, B24B 55/06, B27G 3/00, B28D 7/02, B08B 15/04, B23C 9/00

(54) **VORRICHTUNG ZUM ABSAUGEN VON AUF EINER BEARBEITUNGSMASCHINE IM BEREICH EINES WERKSTÜCKES ANFALLENDEN BEARBEITUNGSRÜCKSTÄNDEN**
SUCTION DEVICE FOR REMOVING RESIDUAL MATTER PRODUCED BY MACHINING EQUIPMENT IN THE NEIGHBOURHOOD OF A WORKPIECE
DISPOSITIF POUR L'ASPIRATION DE RESIDUS D'USINAGE PRODUITS SUR UNE MACHINE D'USINAGE AUTOUR D'UNE PIECE A USINER

(30) Priorität: 28.08.1990 DE 4027107
(43) Veröffentlichungstag der Anmeldung: 16.06.1993
(73) Patentinhaber: RINGLER, Bernhard, 73550 Waldstetten (DE)
(72) Erfinder: RINGLER, Bernhard, 73550 Waldstetten (DE)
(74) Vertreter: Becker, Maria, Dipl.-Phys.
(86) Internationale Anmeldenummer: DE9100629
(87) Internationale Veröffentlichungsnummer: WO9203255

(56) Entgegenhaltungen:
- DE-A- 2 335 177
- DE-B- 1 250 093
- DE-C- 254 234
- DE-C- 846 215
- DE-C- 942 491
- US-A- 3 468 076
- US-A- 3 786 846

## Beschreibung

Die Erfindung betrifft eine Vorrichtung an einer Bearbeitungsmaschine zum Absaugen von auf der Bearbeitungsmaschine im Bereich eines Werkstückes anfallenden Bearbeitungsrückständen, wie Späne und/oder Stäube, mit einer das auf einem Arbeitstisch aufgespannte Werkstück umgebenden Einfassung zur Eingrenzung des Ablagerungsbereichs der Bearbeitungsrückstände in einen nach oben offenen Saugraum und mit einem an den Saugraum über einen Saugkanal angeschlossenen Saugaggregat zur Erzeugung eines Saugluftstromes innerhalb des Saugraumes, wobei der Saugkanal ringförmig ausgebildet ist, den Saugraum umgibt und eine als Absaugdüse ausgebildete, den Saugraum umgebende Absaugöffnung aufweist.

Eine derartige Absaugvorrichtung ist aus der DE-B 1 250 093 bekannt.

Als nachteilig hat sich hierbei herausgestellt, daß die Absaugöffnung des Saugkanals aufgrund der dazwischenliegenden, den Ablagerungsbereich eingrenzenden Einfassung relativ weit von der Bearbeitungsoberfläche entfernt liegt.

Hierdurch ergeben sich nur unzureichende Absaugergebnisse. Außerdem muß bei einer derartigen Absaugvorrichtung der Nachteil in Kauf genommen werden, daß sie nur bei entsprechend großen Steinplatten Verwendung finden kann. Bei kleineren zu bearbeitenden Werkstücken kann die Absaugvorrichtung nicht auf der zu bearbeitenden Oberfläche aufliegen, sondern umgreift das ganze Werkstück, so daß dieses durch die zentrale Öffnung durchtritt. Befindet sich nun zufällig die Absaugöffnung auf der Höhe der zu bearbeitenden Oberfläche, so fehlt es an einer den Ablagerungsbereich eingrenzenden Einfassung. Es kann daher kein Saugraum oberhalb des Ablagerungsbereichs gebildet werden. Überdies ist festzustellen, daß die von der Trennwand gebildete Einfassung bei der bekannten Absaugvorrichtung eher die Funktion eines Spritzschutzes für bei der Bearbeitung absplitternde Partikel aufweist, als daß die Einfassung einen Saugraum für den Saugluftstrom bildet. Dies ist bereits deshalb nicht möglich, da sich die Absaugöffnung am oberen Ende der Einfassung befindet. Durch diesen Aufbau wird kein gleichmäßig verlaufender flächenförmiger Saugluststrom gewährleistet.

Aus den Druckschriften DE-A-2 325 177, US-A-3 468 076, DE-C 846 215 und US-A-3 786 846 sind handgeführte Bearbeitungsmaschinen, wie Schleif- und Poliermaschinen bzw. Fräsmaschinen, bekannt. Diese handbetätigten Vorrichtungen weisen Absaugeinrichtungen auf, die um das Bearbeitungswerkzeug herum angeordnet sind. So ist z.B. der Schleifteller der DE-A-2 335 177 mit einem Ringkanal umgeben, der an seiner der Bearbeitungsfläche zugewandten Seite Ansaugöffnungen aufweist, die in einen Saugkanal münden, der mit einer Saugleitung und einer Saugvorrichtung verbunden ist. Mit dieser Vorrichtung soll Schleifstaub von der Oberfläche des zu bearbeitenden Werkstücks abgesaugt werden, so daß beim nächsten Schleifvorgang eine von Schleifstaub freie Werkstückoberfläche bearbeitet wird. Derartige handbetriebene Schleifvorrichtungen, wie sie in den obengenannten Druckschriften offenbart sind und die eine Absaugvorrichtung aufweisen, sind nur für die Bearbeitung von großflächigen und insbesondere ebenen oder allenfalls leicht gekrümmten Gegenständen geeignet. Nur bei solchen Gegenständen ist gewährleistet, daß die Absaugvorrichtung dichtend auf der Oberfläche des zu bearbeitenden Gegenstandes aufliegt. Bei sehr kleinen Gegenständen steht die Absaugvorrichtung über den zu bearbeitenden Gegenstand hinaus, und es findet keine Absaugung statt. Bei stark gewölbten Oberflächen liegt die Absaugvorrichtung nicht überall auf der Oberfläche auf, so daß Falschluft angesaugt wird. Weit gravierender ist jedoch der Umstand, daß diese Bearbeitungsmaschinen keinen nach oben offenen Saugraum besitzen, über den der Saugluftstrom derart angesaugt wird, daß er über die zu bearbeitende Oberfläche gelenkt wird und die abzusaugenden Bearbeitungsrückstände mitreißt. Bei den bekannten Vorrichtungen muß das Handschleifgerät über die zu bearbeitende Oberfläche bewegt werden, um die Bearbeitungsrückstände überhaupt absaugen zu können. Dies liegt auch daran, daß die Absaugvorrichtung am Werkzeug befestigt ist, wohingegen bei der erfindungsgemäßen Absaugvorrichtung der Saugkanal am Maschinengestell befestigt ist und somit die Absaugung unabhängig von der Bewegung des Werkzeugs ist. Selbst bei stehendem Werkzeug werden die Bearbeitungsrückstände gleichermaßen gut abgesaugt, wie bei sich bewegendem Werkzeug.

Bei den von Hand geführten Vorrichtungen wird also die abzusaugende Luft nicht über die Bearbeitungsoberfläche des Werkstücks gelenkt, so daß die Bearbeitungsrückstände nicht mitgerissen werden können. Im Gegensatz hierzu muß der Schleifapparat und somit die Absaugvorrichtung über die abzusaugenden Bearbeitungsrückstände bewegt werden, um diese absaugen zu können.

Der Erfindung liegt daher die Aufgabe zugrunde, eine Vorrichtung der eingangs genannten Art derart weiterzubilden, daß mit ihr innerhalb des Saug- oder Arbeitsraumes ein auf das zu bearbeitende Werkstück sowie auf die Bearbeitungsart abstimmbarer, über dem Ablagerungsbereich weitestgehend gleichmäßig verlaufender flächenförmiger Saugluftstrom erzielt werden kann.

Diese Aufgabe wird erfindungsgemäß dadurch gelöst, daß die Absaugöffnung im Bereich der Ebene einer Aufspannfläche des Arbeitstisches angeordnet ist, daß der Saugkanal aus mehreren in Rohrformstücken schwenkbar gehaltenen Kanalabschnitten besteht und daß die Rohrformstücke mittels Haltern am Arbeitstisch befestigt sind.

Mit der erfindungsgemäßen Vorrichtung ist gewährleistet, daß die Einfassung, die sich oberhalb der Absaugöffnung befindet, einen Saugarum bildet, der den Saugluftstrom gleichmäßig auf den Ablagerungsbereich leitet. Außerdem ist durch die Anordnung der Absaugöffnung im Bereich der Ebene der Aufspannfläche des Arbeitstisches gewährleistet, daß die Bearbeitungsrückstände unabhängig von Größe und Gewicht vollständig abgesaugt werden, da sie direkt auf dem Niveau der Aufspannfläche von den Absaugöffnungen aufgenommen werden können. Sie müssen also nicht, wie beim Stand der Technik, vom Saugluftstrom angehoben werden, um in den Saugkanal zu gelangen. Darüber hinaus ist aufgrund dessen, daß der Saugkanal aus in Rohrformstücken schwenkbar gehaltenen Kanalabschnitten besteht, die Möglichkeit gegeben, den Saugluftstrom durch entsprechendes Verstellen der Düsen individuell auf jede beliebige Werkstückform und -größe bzw. an die jeweilige Bearbeitungsart anzupassen.

Durch die Merkmale des Anspruchs 3 ist eine optimale Einstellung des Saugkanals am Arbeitstisch gewährleistet.

Eine einfache und schnelle Montage der Vorrichtung wird erreicht, wenn die Einfassung gemäß Anspruch 4 an dem Saugkanal befestigt ist, wobei zur Optimierung des Unterdrucks im Saugraum eine schwenkbare Befestigung der Einfassung am Absaugkanal oder einem sonstigen Bauteil der Bearbeitungsmaschine von Vorteil ist.

Eine nachgiebige Ausbildung der Einfassung ergibt sich durch die Ausbildung nach Anspruch 6. Eine derart als Borstenvorhang ausgebildete Einfassung kann ohne Beschädigung von Bearbeitungswerkzeug überfahren werden. Mit den Merkmalen des Anspruchs 7 wird dabei eine andere vorteilhafte Befestigungsvariante der Einfassung erzielt.

Schließlich kann es für die Überwachung der Bearbeitung zweckmäßig sein, wenn gemäß Anspruch 8 ein Sichtfenster im Verlauf des Borstenvorhangs vorgesehen ist.

In der Zeichnung ist ein mögliches Ausführungsbeispiel der erfindungsgemäßen Vorrichtung zusammen mit einer Fräsmaschine schematisch dargestellt.

Es zeigen:
- Figur 1: in Vorderansicht teilweise eine Fräsmaschine mit einer am Arbeitstisch befestigten erfindungsgemäßen Vorrichtung im Querschnitt,
- Figur 2: in Draufsicht den Arbeitstisch der Fräsmaschine mit dem umlaufenden Saugkanal der Vorrichtung im Längsschnitt,

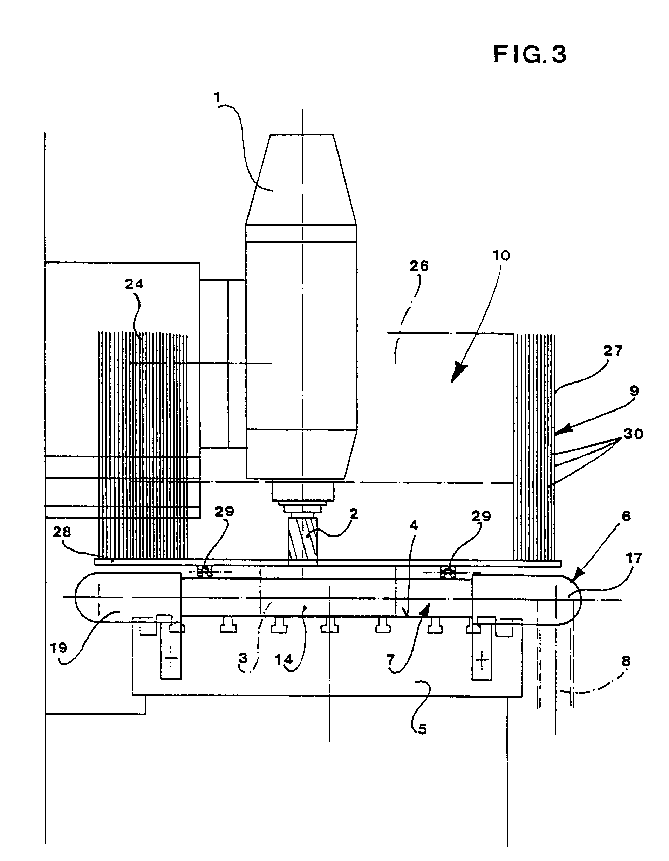

- Figur 3: eine Seitenansicht der Vorrichtung.

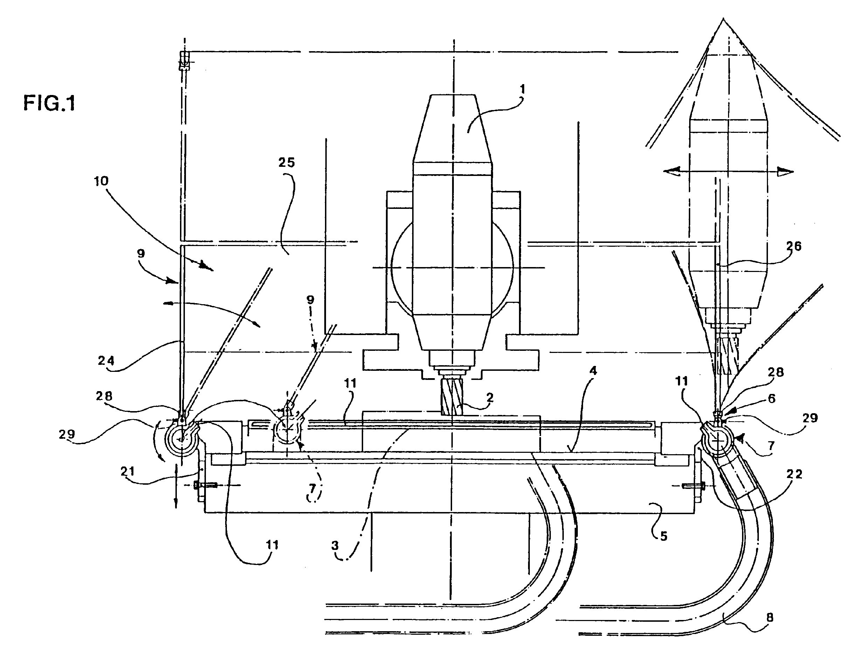

In Fig. 1 ist mit 1 ein Fräskopf einer Fräsmaschine bezeichnet, der ein Fräswerkzeug 2 zur spanabhebenden Bearbeitung eines Werkstücks enthält. Das Werkstück 3 ist auf einer Aufspannfläche 4 eines Arbeitstisches 5 in nicht näher dargestellter Weise festgespannt.

Die während der Bearbeitung des Werktücks 3 auf dem Arbeitstisch 5 anfallenden Späne und/oder Staubpartikel werden mittels einer Vorrichtung 6 abgesaugt. Die Vorrichtung 6 beteht dabei aus einem den Arbeitstisch 5 umgebenden ringförmigen Saugkanal 7, der über eine flexible Saugleitung 8 mit einem nicht dargestellten Saugaggregat verbunden ist, und einer rahmenförmigen Einfassung 9. Die vom Arbeitstisch 5 im Winkel nach oben abstehende Einfassung 9 bildet die Grenze für den Ablagerungsbereich der Bearbeitungsrückstände auf der Aufspannfläche 4 und zusammen mit dem Saugkanal 7 die Grenze für einen sich über der Aufspannfläche 4 bei eingeschaltetem Saugaggregat ausbildenden Saugraum 10.

Damit sich innerhalb des Saugraumes 10 ein gleichmäßiger in Richtung der Einfassung 9 wirkender Saugzug ausbilden kann, ist die Saugöffnung im Saugkanal 7 als Ringdüse 11 ausgebildet. Durch die Anordnung der Ringdüse 11 in Höhe der Aufspannfläche 4 sowie im Eckbereich zwischen der Aufspannfläche 4 und der Einfassung 9 ist sichergestellt, daß der gesamte innerhalb der Einfassung 9 liegende Ablagerungsbereich der Bearbeitungsrückstände vom Saugzug erfaßt wird.

Der ringförmige Saugkanal 7 ist in seiner Form der Form des Arbeitstisches 5 angepaßt. Er besteht aus vier den Längen der einzelnen Tischkanten etwa entsprechenden geraden Kanalabschnitten 12 bis 15 und ebenso vielen rechtwinklig gebogenen Rohrformstücken 16 bis 19, welche die Kanalabschnitte 12 bis 15 an den Ecken des Arbeitstisches 5 jeweils miteinander verbinden. Die Kanalabschnitte 12 bis 15 sind um ihre jeweilige Kanallängsachse drehbar in den Rohrformstücken 16 bis 19 eingesetzt, wobei Dichtringe für die entsprechende Abdichtung zwischen den Teilen sorgen. Hierdurch kann die Richtung der in jedem Kanalabschitt 12 bis 15 vorhandenen Absaugdüse 11 jeweils optimal auf den Saugraum 10 bzw. auf das Werkstück 3 eingestellt werden.

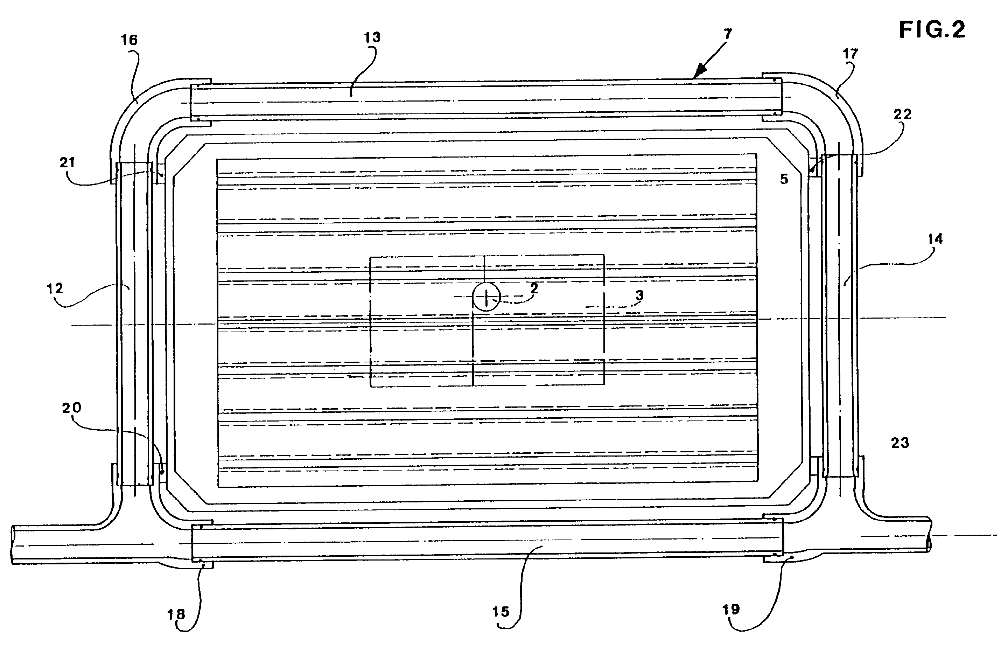

An den Rohrformstücken 16 bis 19 sind laschenförmige Halter 20 bis 23 angebracht, über welche die Befestigung des Saugkanals 7 an den Stirnseiten des Arbeitstisches 5 erfolgt. Durch beispielsweise Langlöcher in den Haltern 20 bis 23 ist es dabei möglich, den Saugkanal 7 gegenüber der Aufspannfläche 4 in der Höhe einzustellen. Gemäß Fig. 2 haben die Rohrformstücke 18 und 19 einen zusätzlichen Anschlußstutzen für die Saugleitung 8. Die Zahl der angeschlossenen Saugleitungen 8 ist dabei in erster Linie von der Größe des Saugraumes 10 abhängig. Im Normalfall reicht es aus, wenn nur eine Saugleitung 8 an den Saugkanal 7 angeschlossen ist.

In Abhängigkeit von der Größe des zu bearbeitenden Werkstückes 3 ist es möglich, wie in Fig. 1 durch strichpunktierte Linien dargestellt, den Saugkanal 7 zusammen mit der Einfassung 9 direkt auf der Aufspannfläche 4 zu befestigen. Dies führt zu einem das Werkstück 3 eng umschließenden verkleinerten Saugraum 10, in dem ein besonders hoher Unterdruck bzw. ein starker Saugluftstrom erzeugt werden kann, der in der Lage ist, beispielsweise auch sehr grobe Schruppspäne und große Staubmengen sicher aus dem Saugraum abzuführen.

Die zur Vorrichtung 6 gehörende Einfassung 9 besteht aus einer Vielzahl von sich gegenseitig überlappenden Borsten 30, welche insgesamt einen den Saugraum 10 umschließenden Borstenvorhang bilden, der ohne weiteres vom Fräskopf 1 bzw. dem Bearbeitungswerkzeug überfahren werden kann. Entsprechend der Rechteckform des Arbeitstisches 5 setzt sich der Borstenvorhang dabei aus vier einzelnen Borstenwänden 24 bis 27 zusammen. Die Borsten 30 jeder einzelnen Wand sind dabei in getrennten Leisten 28 gehalten, die ihrerseits auf der Oberseite des Saugkanals 7 in Scharnieren 29 schwenkbar befestigt sind. Damit lassen sich die Borstenwände 23 bis 27 einzeln auf die Flugrichtung der Späne so einstellen, daß diee von den Borstenwänden in einem bevorzugten Winkel zur Absaugdüse 11 abgelenkt werden. Außerdem wird bei zur Aufspannfläche 4 hin schräg getellten Borstenwänden 23 bis 27 die Öffnung des Saugraumes 10 verkleinert, so daß sich innerhalb des Saugraumes 10 ein noch höherer Unterdruck bzw. stärkerer Saugzug - auch um den Fingerfräser herum - ausbilden kann, wodurch eine weitere Verbesserung im Abtransport der Bearbeitungsrückstände erzielt wird.

Anstelle der Befestigung des Borstenvorhangs am Saugkanal 7 ist es ebenfalls möglich, daß dieser beispielsweise am Fräskopf 1 befestigt wird, wobei die Borstenenden dann die Aufspannfläche 4 berühren sollen.

Durch den Borstenvorhang ist die Sicht auf das Werkstück 3 zumindest eingeschränkt. Zur Verbesserung der Sicht kann daher im Verlauf des Borstenvorhangs ein Fenster aus Kunstglas o. dgl. vorgesehen werden.

## Patentansprüche

1. Vorrichtung an einer Bearbeitungsmaschine zum Absaugen von auf der Bearbeitungsmaschine im Bereich eines Werkstückes (3) anfallenden Bearbeitungsrückständen, wie Späne und/oder Stäube, mit einer das auf einem Arbeitstisch (5) aufgespannte Werkstück (3) umgebenden Einfassung (9) zur Eingrenzung des Ablagerungsbereichs der Bearbeitungsrückstände in einem nach oben offenen Saugraum (10) und mit einem an den Saugraum (10) über einen Saugkanal (7) angeschlossenen Saugaggregat zur Erzeugung eines Saugluftstromes innerhalb des Saugraumes (10), wobei der Saugkanal (7) ringförmig ausgebildet ist, den Saugraum (10) umgibt und eine als Absaugdüse (11) ausgebildete, den Saugraum (10) umgebende Absaugöffnung aufweist,
**dadurch gekennzeichnet,**
daß die Absaugöffnung im Bereich der Ebene einer Aufspannfläche (4) des Arbeitstisches (5) angeordnet ist, daß der Saugkanal (7) aus mehreren in Rohrformstücken (16, 17, 18, 19) schwenkbar gehaltenen Kanalabschnitten (12, 13, 14, 15) besteht und daß die Rohrformstücke (16, 17, 18, 19) mittels Halter (20, 21, 22, 23) am Arbeitstisch befestigt sind.

2. Vorrichtung nach Anspruch 1, dadurch gekennzeichnet, daß die Absaugdüse (11) im Eckbereich zwischen der Einfassung (9) des Saugraumes (10) und der Aufspannfläche (4) des Arbeitstisches (5) angeordnet ist.

3. Vorrichtung nach Anspruch 1 oder 2, dadurch gekennzeichnet, daß die Halter (20 - 23) am Arbeitstisch (5) in einer vertikalen und horizontalen Richtung einstellbar befestigt sind.

4. Vorrichtung nach einem der Ansprüche 1 - 3, dadurch gekennzeichnet, daß die Einfassung (9) am Saugkanal (7) befestigt ist.

5. Vorrichtung nach einem der Ansprüche 1 - 4, dadurch gekennzeichnet, daß die Einfassung (9) aus einer Vielzahl von sich gegenseitig überlappenden Borsten (30) besteht, die in einer am Saugkanal (7) befestigten Leiste (28) gefaßt sind und die insgesamt einen den Saugraum (10) seitlich umschließenden Borstenvorhang bilden.

6. Vorrichtung nach einem der Ansprüche 1 - 5, dadurch gekennzeichnet, daß die Leisten (28) des Borstenvorhangs an einem mit einem Bearbeitungswerkzeug (2) bewegbaren Maschinenteil (Fräskopf 1) befestigt sind, wobei die beweglichen Borstenenden an der Aufspannfläche (4) des Arbeitstisches (5) anliegen.

7. Vorrichtung nach einem der Ansprüche 1 - 6, dadurch gekennzeichnet, daß die Leisten (28) schwenkbar am Saugkanal (7) angebracht sind.

8. Vorrichtung nach einem der Ansprüche 1 - 7, dadurch gekennzeichnet, daß im Verlauf des Borstenvorhangs ein Sichtfenster vorgesehen ist.

## Claims

1. Suction device for removing residual matter, such as chips and/or dusts, produced by machining equipment in the neighborhood of a workpiece (3) comprising a border surrounding the workpiece (3), when mounted on a worktable (5), for defining the deposition area for the machining residues in an upwardly open suction space (10), and a suction unit connected to the suction space (10) via a suction channel (7) for generating a suction air flow within the suction space (10), the suction channel (7) having an annular shape, surrounding the suction space (10) and comprising a suction opening which is designed as suction nozzle (11) and which surrounds the suction space (10)
**characterized in that**
the suction opening is arranged in the area of the plane of a mounting surface (4) of the worktable (5), that the suction channel (7) consists of a plurality of channel sections (12, 13, 14, 15) held in pivotal relationship in tubular connections (16, 17, 18, 19), and that the tubular connections (16, 17, 18, 19) are fixed on the worktable by means of holders (20, 21, 22, 23).

2. Device according to claim 1, characterized in that the suction nozzle (11) is arranged in the corner area between the border (9) of the suction space (10) and the mounting surface (4) of the worktable (5).

3. Device according to claim 1 or 2, characterized in that the holders (20 - 23) are fixed on the worktable (5) so as to be adjustable in vertical and horizontal direction.

4. Device according to any of claims 1 - 3, characterized in that the border (9) is fixed on the suction channel (7).

5. Device according to any of claims 1 - 4, characterized in that the border (9) consists of a plurality of mutually overlapping bristles (30) held in a strip (28) which is fixed on the suction channel (7) and forming all together a bristle curtain enclosing the suction space (10) laterally.

6. Device according to any of claims 1 - 5, characterized in that the strips (28) of the bristle curtain are fixed on a machine part (milling head 1) that can be moved together with a machining tool (2), the movable bristle ends being in contact with the mounting surface (4) of the worktable 5.

7. Device according to any of claims 1 - 6, characterized in that the strips (28) are attached to the suction channel (7) in pivotal relationship.

8. Device according to any of claims 1 - 7, characterized in that an inspection window is provided in the line of the bristle curtain.

## Revendications

1. Dispositif sur une machine-outil pour l'aspiration des résidus d'usinage, tels que copeaux et/ou poussières, se produisant sur la machine à proximité d'une pièce à usiner (3), comportant un cadre (9) entourant la pièce à usiner (3) serrée sur une table de machine (5), pour délimiter la zone de dépôt des résidus dans un espace d'aspiration (10) ouvert vers le haut, et comportant un mécanisme d'aspiration raccordé par un canal d'aspiration (7) afin de générer un flux d'air d'aspiration à l'intérieur de l'espace d'aspiration (10), ledit canal d'aspiration (7) étant de forme annulaire, entourant l'espace d'aspiration (10) et présentant un orifice d'aspiration configuré en buse aspirante (11) et entourant l'espace d'aspiration (10), caractérisé en ce que l'orifice d'aspiration est disposé à proximité du plan d'une face de déploiement (4) de la table de machine (5), en ce que le canal d'aspiration (7) est constitué de plusieurs sections de canal (12, 13, 14, 15) maintenues de manière pivotante à l'intérieur de pièces moulées tubulaires (16, 17, 18, 19) et en ce que lesdites pièces moulées tubulaires (16, 17, 18, 19) sont fixées sur la table de machine au moyen de supports (20, 21, 22, 23).

2. Dispositif selon la revendication 1, caractérisé en ce que la buse d'aspiration (11) est disposée dans la zone angulaire entre le cadre (9) de l'espace d'aspiration (10) et la face de déploiement (4) de la table de machine (5).

3. Dispositif selon la revendication 1 ou 2, caractérisé en ce que les supports (23) sont fixées de manière réglable, en direction verticale et horizontale, sur la table de machine (5).

4. Dispositif selon l'une des revendications 1 à 3, caractérisé en ce que le cadre (9) est fixé sur le canal d'aspiration (7).

5. Dispositif selon l'une des revendications 1 à 4, caractérisé en ce que le cadre (9) est constitué d'une pluralité de brosses (30) se chevauchant mutuellement, lesquelles sont montées dans une tringle (28) fixée sur le canal d'aspiration (7) et forment, toutes ensembles, un rideau entourant latéralement l'espace d'aspiration (10).

6. Dispositif selon l'une des revendications 1 à 5, caractérisé en ce que les tringles (28) du rideau de brosses sont fixées sur une pièce de machine (tête de fraise 1) mobile avec un outil d'usinage (2), les extrémités mobiles des brosses s'appliquant sur la face de déploiement (4) de la table de machine (5).

7. Dispositif selon l'une des revendications 1 à 6, caractérisé en ce que les tringles (28) sont fixées de manière à pouvoir pivoter sur le canal d'aspiration (7).

8. Dispositif selon l'une des revendications 1 à 7, caractérisé en ce qu'un regard de visée est prévu dans le rideau de brosses.
